# EUROPÄISCHE PATENTANMELDUNG

(11) **EP 1 504 872 A1**
(43) Veröffentlichungstag der Anmeldung: **09.02.2005**
(21) Anmeldenummer: 04405493.0
(22) Anmeldetag: 04.08.2004
(51) Int. Cl.: B29C 45/14, B65D 25/20, B32B 7/06

(54) **Verfahren und Inlay-Folie zum Herstellen eines diffusionsdichten Behältnisses aus Kunststoff mit Dekorationsflächen und einer Inlay-folie**

(30) Priorität: 04.08.2003 CH 13492003
(71) Anmelder: Schöttli AG, 8253 Diessenhofen (CH)
(72) Erfinder: Zangerle, Wolfgang, 8442 Hettingen (CH)
(74) Vertreter: Gachnang, Hans Rudolf

(57) **Zusammenfassung**

Zur Herstellung eines diffusionsdichten und mit einer Dekorfolie (1) versehenen Behältnisses werden eine Dekorfolie (1) und eine Diffusionsfolie (3) temporär miteinander verbunden, bevor sie in die spritzgiessform (9) eingelegt werden. Durch ein Loch (5) in der Dekorfolie (1) wird flüssiger Kunststoff zwischen die beiden Folien (1,3) eingespritzt. Letztere werden durch den flüssigen Kunststoff (13) an die Formwände angepresst und mit dem flüssigen Kunststoff verbunden.

## Beschreibung

Gegenstand der Erfindung ist ein Verfahren zum Herstellen eines diffusionsdichten Behältnisses aus Kunststoff gemäss des oberbegriff des Patentanspruchs 1.
Gegenstand der Erfindung ist weiter eine Inlay-Folie für die Herstellung eines diffusionsdichten Behältnisses aus Kunststoff gemäss Oberbegriff des Patentanspruchs 6.

Behältnisse aus Kunststoff haben den Nachteil, dass deren Wandungen nicht diffusionsdicht sind. Dies führt dazu, dass bei der Lagerung ein Flüssigkeitsverlust und dadurch ein Austrocknen des Inhalts oder ein Verlust an Geschmacksstoffen entsteht. Letzteres kann nicht nur nachteilig für den Inhalt des Behältnisses sein, sondern diese leichtflüchtigen, durch den Kunststoff diffundierenden Geschmacksstoffe können auch die Umgebung, beispielsweise das Innere eines Kühlschranks, nachteilig belasten.
Es sind bereits Verfahren, sogenannte In Mould Labelling-Verfahren (IML) und Folien zur Herstellung eines diffusionsdichten Kunststoffbehälters bekannt. Bei einem bekannten Verfahren (DE-C2 10105659) wird vor dem Schliessen der Kunststoffspritzform ein geeignet geformtes oder gefaltetes Label, ein sogenanntes Inlay, auf die die Aussenseite des Behälters bildende Formwand aufgelegt, bevor die Innenform eingeführt und damit die Spritzgiessform geschlossen wird. Durch Anspritzen von der Innenform her wird die eingelegte Folie an die Aussenwand gepresst und auf deren Innenseite der Behälter aus Kunststoff erzeugt. Mit diesem Verfahren kann wohl ein diffusionsdichter Behälter erzeugt werden, doch wird die Diffusion erst an der Aussenseite an der diffusionsdichten Folie, beispielsweise eine Aluminiumfolie oder eine mit Aluminium bedampfte Folie, gestoppt. Nicht verhindert werden kann allerdings, dass das Kunststoffmaterial, das direkt in Kontakt zum Inhalt des Behälters steht, durchdrungen und damit durch Fremdstoffe angereichert wird. Auch kann allenfalls Kunststoffmaterial das Füllgut beeinträchtigen.

Eine Aufgabe der Erfindung ist es, im Spritzgiessverfahren ein Kunststoffteil, insbesondere einen Kunststoffbehälter herzustellen, der einerseits eine optimale Diffusionsdichtigkeit aufweist und bei dem andererseits mit einer Inlay-Folie die Dekoration der Aussenseite erzeugt wird.
Eine weitere Aufgabe ist die Schaffung einer Inlay-Folie zur Durchführung des Verfahrens.

Gelöst werden diese Aufgaben durch ein Verfahren gemäss den Merkmalen des Patentanspruchs 1 sowie durch eine Inlay-Folie gemäss den Merkmalen des Anspruchs 6. Vorteilhafte Ausgestaltungen des Verfahrens und der Inlay-Folie sind in den abhängigen Ansprüchen definiert.

Durch die Aufteilung der beiden Funktionsbereiche, nämlich Diffusionsdichtigkeit einerseits und Dekoration andererseits auf zwei unabhängige Inlay-Folien, gelingt es, beide Aufgaben in einem einzigen Arbeitsgang optimal zu lösen, in dem der flüssige Kunststoff beim Spritzgiessen zwischen die beiden als Einheit in die Spritzgiessform eingelegten Folien eingespritzt wird. Beim Einspritzen durch ein Loch, vorzugsweise ein Loch in der Dekorfolie, die keine Aufgaben bezüglich Diffusionsdichtigkeit übernehmen muss, können die beiden temporär durch lösbare Mittel miteinander verbundenen Folien voneinander getrennt und der eingespritzte Kunststoff einwandfrei dazwischen verteilt werden. Die beiden Inlay-Folien, nämlich die innen zu liegen kommende diffusionsdichte Folie und die aussen zu liegen bestimmte Dekorfolie, können durch mechanische Mittel oder mittels schäl- oder wärmelösbarem Kleber miteinander temporär verbunden sein. Die miteinander verbundenen Folien lassen sich wie eine Einfachfolie in die Spritzgiessform einlegen. In einer bevorzugten Ausführung weist nicht nur der dem Loch in der Dekorfolie gegenüber liegende Spritzgiess-Formbereich eine linsenförmige Ausbuchtung auf, sondern es ist auch die diffusionsdichte Inlay-Folie mit einer entsprechenden Ausbuchtung versehen, welche eine optimale Verteilung der im wesentlichen rechtwinklig zur Oberfläche der beiden Folien eingespritzten Kunststoffmasse ermöglicht. Bei der Herstellung von Tuben, wie Zahnpastatuben, kann auf ein Loch in der aussenliegenden Dekorfolie verzichtet werden und seitlich ausserhalb des Randes der Dekorfolie im konischen Halsbereich der Tube eingespritzt werden, wenn sich die innen liegende diffusionsdichte Folie in den konischen Bereich erstreckt. Dadurch kann eine etikettenartige, den im wesentlichen zylindrischen Bereich umschliessende Dekorfolie verwendet werden; gleichzeitig ist aber die Tube auch im Bereich des konischen, das Gewinde tragenden Ende diffusionsdicht gestaltbar.

Anhand illustrierter Ausführungsbeispiele wird die Erfindung nachfolgend näher erläutert. Es zeigen
- Figur 1: eine perspektivische Darstellung zweier noch beabstandet liegender Diffusions- und Dekorfolien,
- Figur 2: eine schematische Darstellung der beiden Folienpositionen im Bezug auf das Spritzgussteil,
- Figur 3: einen Ausschnitt der beiden in eine Spritzgiessform eingelegten Folien im Bereich des Anspritzpunktes, vor dem Anspritzen,
- Figur 4: einen Ausschnitt der beiden in eine Spritzgiessform eingelegten Folien im Bereich des Anspritzpunktes, nach dem Anspritzen,
- Figur 5: eine schematische Darstellung eines nach dem Verfahren gespritzten Behältnisses,
- Figur 6: einen Querschnitt durch eine Spritzgiessform für eine Tube mit eingelegten Folien, vor dem Spritzen,
- Figur 7: einen Querschnitt durch eine Spritzgiessform der Tube in Figur 6 mit eingelegten Folien, nach dem Spritzen,
- Figur 8: eine Teilansicht der Abwicklung der diffusionsdichten Folie für einen Tubenhals,
- Figur 9: einen Längsschnitt durch eine Spritzgiessform für eine Tube mit eingelegten Folien in einer weiteren Ausgestaltung der Erfindung, vor dem Einspritzen,
- Figur 10: einen Längsschnitt durch eine Spritzgiessform der Tube in Figur 9 mit eingelegten Folien, nach dem Einspritzen.

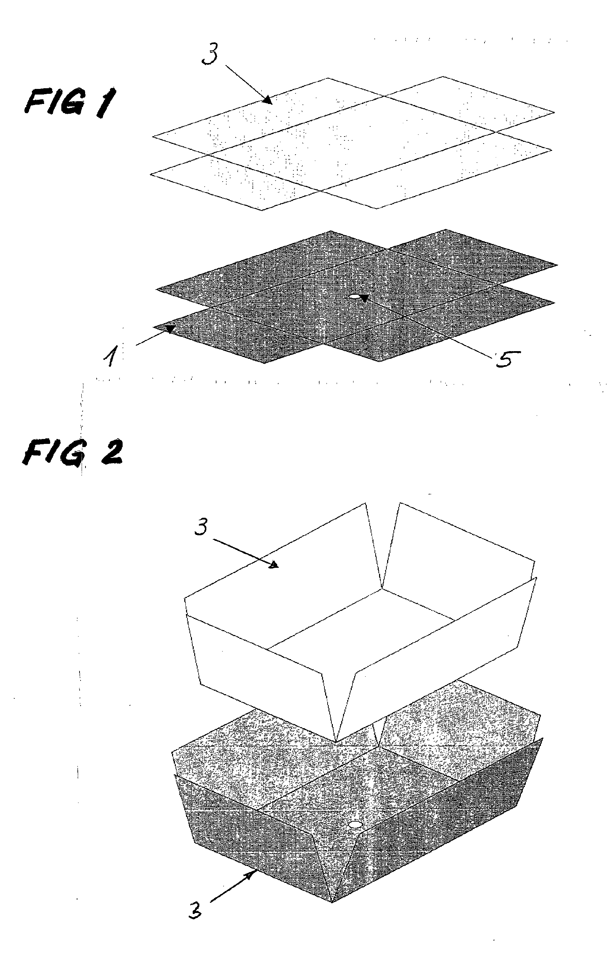

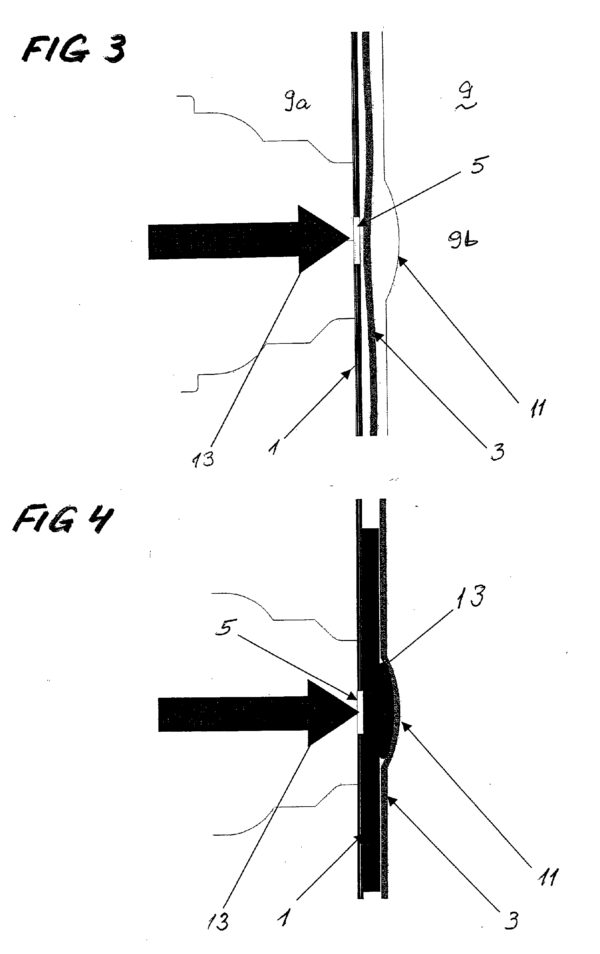

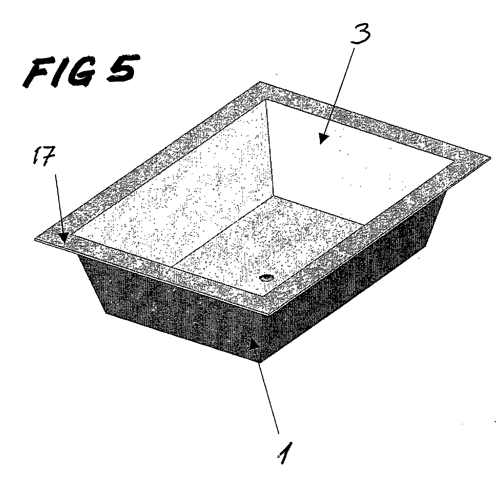

In Figur 1 ist mit Bezugszeichen 1 eine Dekorfolie und mit Bezugszeichen 3 eine diffusionsdichte Folie, kurz Diffusionsfolie, dargestellt. Im Zentrum der Diffusionsfolie ist ein Loch 5 ausgestanzt, durch das, wie später zu beschreiben wird, flüssiger Kunststoff eingespritzt werden kann. Die dargestellten beiden Folien 1,3 bilden, wenn die Zuschnitte geeignet gefaltet sind (vergleiche Figur 2), die Auskleidung bzw. Umkleidung eines meist viereckigen Behälters 7, wie es beispielsweise für die Verpackung von Speiseeis oder anderen Halbkonserven wie Lasagne etc. Verwendung findet. Mindestens die diffusionsdichte Folie 3 ist so gefaltet, damit sie die gesamte innere Abwicklung darstellt und bedeckt. Die beiden in Figur 1 noch beabstandet dargestellten Folien 1,3 werden, bevor sie in eine Spritzgiessform 9 eingelegt werden, vorzugsweise lösbar miteinander verbunden. Die Verbindung kann beispielsweise durch einen schälbaren Kleber erfolgen, vergleichbar dem Kleber auf den selbsthaftenden Notizzetteln, welche unter dem Markennamen "post-it" der Firma 3M bekannt sind, oder es kann ein Hotmelt-Kleber verwendet werden, der unter der Hitze des eingespritzten Kunststoffmaterials schmilzt. Weiter können die beiden Folien auch in geeigneter Weise mechanisch miteinander verbunden werden. Die beiden miteinander temporär verbundenen Folien 1,3 werden in die geöffnete Spritzgiessform 9, dort in die konkave Aussenform 9a eingelegt oder über die konvexe Innenform 9b gestülpt werden. Figur 3 zeigt die beiden Folien 1,3, die an der Aussenform 9a anliegen. Der besseren Anschaulichkeit wegen, liegen die beiden Folien 1,3 in Figur 3 nicht dicht aufeinander, sondern in geringem Abstand, beispielsweise einem Abstand, der der Dicke der Folien 1,3 entspricht. Dies weil die gegenseitige temporäre Verbindung vorzugweise nicht im Bereich des Lochs 5 erfolgt, sondern längs der Kantenbereiche oder eines Kantenbereichs. In Figur 3 ist weiter ersichtlich, dass in der konvexen Innenform 9b der Form 9 eine linsenförmige Ausbuchtung 11 angebracht ist. Diese dient, wie aus Figur 4 ersichtlich, dazu, während des Einspritzens von flüssigem Kunststoff 13 (schematisch durch einen schwarzen Pfeil dargestellt) genügend Raum für den aus der Einspritzdüse 15 austretenden flüssigen Kunststoff zu schaffen. Der flüssige Kunststoff kann in der linsenförmigen Ausbuchtung 11 radial zur Einspritzrichtung zwischen die beiden Folien 1,3 gelangen und verteilt werden. Beim Auftreffen des flüssigen Kunststoffs 13 auf den Bereich der Diffusionsfolie 3 über der linsenförmigen Ausbuchtung 11 wird erstere in diese Ausnehmung 11 hineingepresst. Es ist auch möglich, in der Folie 3 bereits eine entsprechende, in die Ausbuchtung 11 zu liegend kommende Bombierung vorab anzubringen (keine Darstellung). Die flächenmässige Ausdehnung der Ausbuchtung 11 ist vorzugsweise wesentlich grösser als die flächenmässige Ausdehnung des Lochs 5 und der Einspritzdüse 15. Nach Beendigung des Einspritzvorgangs, wenn der gesamte Zwischenraum zwischen der Dekorfolie 1 und der Diffusionsfolie 3 vollständig mit Kunststoff 13 gefüllt ist und folglich die beiden Folien 1,3 satt an den Formwänden anliegen, ist zwischen den beiden Folien 1,3 der Behälter 7 entstanden. Dessen Oberflächen sind, wenn die Materialien der Folien 1,3 und des Kunststoffs 13 chemisch miteinander reagieren können, was von Vorteil ist, unlösbar miteinander verbunden. Nach Beendigung des Spritzvorgangs kann der Behälter 7 in herkömmlicher Weise ausgeformt werden. Auf seiner Aussenseite liegt direkt die Dekorfolie 1; seine Innenseite ist mit der Diffusionsfolie 3 überzogen. Der fertige Behälter 7 ist in Figur 5 dargestellt. Seine öffnung wird vorzugsweise von einem Siegelrand 17 umgeben. Die Oberfläche des Siegelrands 17 ist vorzugsweise nicht mit der Diffusionsfolie 3 bedeckt. Dies ermöglicht ein einfaches Aufsiegeln eines Deckels, der selbstverständlich nach dem gleichen Verfahren diffusionsdicht hergestellt werden kann.

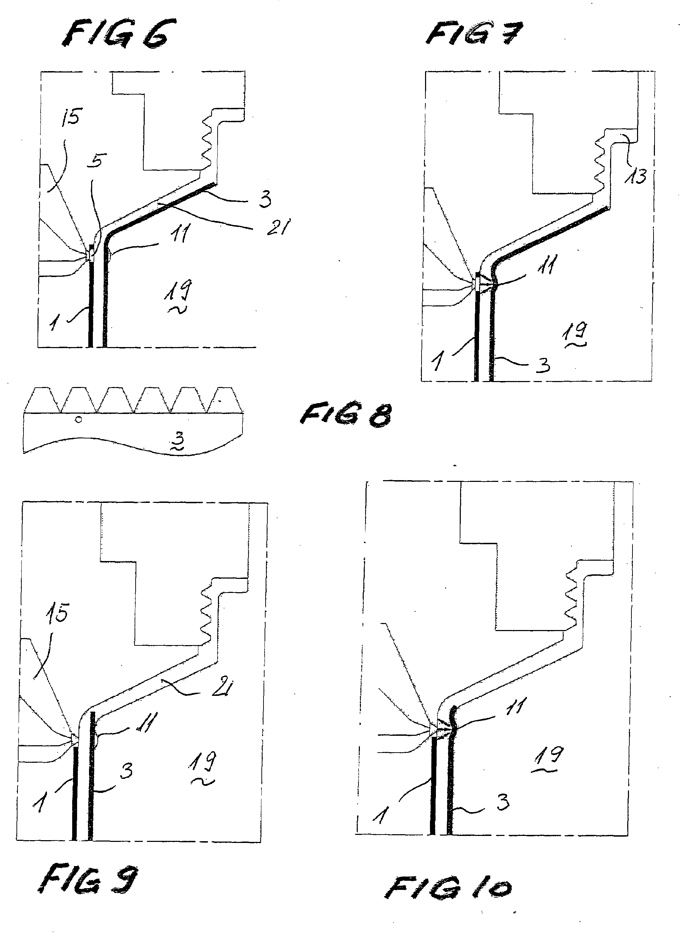

Die Figuren 6 bis 10 zeigen eine weitere Ausgestaltung der Erfindung, nämlich das Verfahren bei der Herstellung einer Tube 19. Gemäss Figur 6 liegt das Loch 5 zum Einspritzen des flüssigen Kunststoffs 13 im oberen Randbereich der Dekorfolie 1. Die Diffusionsfolie 3 ist in diesem Ausführungsbeispiel grösser als die Dekorfolie 1, um von der Innenseite den konischen Bereich 21 der Tube 19 diffusionsdicht abzudecken. Für den konischen Bereich 21 weist die Diffusionsfolie 3 bzw. deren Abwicklung gemäss Figur 8 eine entsprechende Formgebung auf. Der konische Bereich 21 wird durch nebeneinander gereihte Trapeze, die sich in der Form zum konischen Mantel umformen, gebildet.

Das Einspritzen des Kunststoffs 13 kann auch knapp oberhalb des oberen Randes der Dekorfolie 1 erfolgen. Allerdings ist auch hier vorzugsweise gegenüber dem Einspritzpunkt eine Ausbuchtung 11 im Formkörper eingelassen, um eine optimale Verteilung des eingespritzten Kunststoffes sicherzustellen (vergleiche Figuren 9 und 10).

## Patentansprüche

1. Verfahren zum Herstellen eines diffusionsdichten Behälters (7,19) aus Kunststoff durch Spritzgiessen, bei dem mindestens die Wandbereiche und der Boden von einer diffusionsdichten Folie (3) bedeckt sind und bei dem die diffusionsdichte Folie (3) vor dem Spritzen in die Spritzgiessform (9) eingelegt und vom Kunststoff (13) einseitig beaufschlagt wird, **dadurch gekennzeichnet, dass** zusätzlich zur diffusionsdichten Folie (3) eine Dekorfolie (1) in die Spritzform (9) eingelegt wird und dass der flüssige Kunststoff (13) zwischen die beiden Folien (1,3) eingespritzt wird.

2. Verfahren nach Anspruch 1, **dadurch gekennzeichnet, dass** der flüssige Kunststoff (13) durch ein Loch (5) in einer der Folien (1,3) eingespritzt wird.

3. Verfahren nach einem der Ansprüche 1 oder 2, **dadurch gekennzeichnet, dass** die beiden Folien (1,3) vor dem Einlegen in die Spritzform (9) mindestens an einer Stelle wiederlösbar miteinander verbunden oder verklebt werden.

4. Verfahren nach einem der Ansprüche 1 bis 3, **dadurch gekennzeichnet, dass** der flüssige Kunststoff (13) im wesentlichen lotrecht zur Folienoberfläche durch das Loch (5) in Richtung auf die zweite Folie (3) eingespritzt wird.

5. Verfahren nach einem der Ansprüche 1 bis 4, **dadurch gekennzeichnet, dass** der flüssige Kunststoff (13) durch eine linsenförmige Ausbuchtung (11) an der gegenüberliegenden Folie (3) in der Spritzform (9) umgelenkt und zwischen den beiden Folien (1,3) verteilt wird.

6. Inlay-Folie (3) für die Herstellung eines Behältnisses (7) mit diffusionsdichten Wänden, zur Durchführung des Verfahrens nach Anspruch 1, **gekennzeichnet durch** eine diffusionsdichte Folie (3) und eine Dekorfolie (1), die übereinander liegen und temporär miteinander lösbar verbunden sind.

7. Inlay-Folie nach Anspruch 6, **dadurch gekennzeichnet, dass** in einer der Folien (1) ein Loch (5) und in der anderen Folie (3) dem Loch (5) gegenüberliegend eine linsenförmige Ausbuchtung (11) ausgebildet ist.

8. Inlay-Folie nach Anspruch 7, **dadurch gekennzeichnet, dass** die flächenmässige Ausdehnung der Ausbuchtung oder Linse (11) grösser ist als diejenige des Lochs (5) .

9. Inlay-Folie nach einem der Ansprüche 6 bis 8, **dadurch gekennzeichnet, dass** die innen zu liegen kommende diffusionsdichte Folie (3) als Diffusionssperre ausgebildet ist und die aussen zu liegen kommende Folie (1) als Dekorfolie fungiert.

10. Inlay-Folie nach Anspruch 6, **dadurch gekennzeichnet, dass** bei der Herstellung eines tubenförmigen Behältnisses (7) der Einspritzbereich im Bereich der Kante der aussenliegenden Dekorfolie (1) liegt und die die Diffusionssperre bildende innenliegende Folie (3) gegenüber dem Einspritzbereich die linsenförmige Ausbuchtung (11) aufweist.
